# EUROPÄISCHE PATENTANMELDUNG

(11) **EP 4 817 774 A1**
(43) Veröffentlichungstag der Anmeldung: **07.10.2026**
(21) Anmeldenummer: 25223243.4
(22) Anmeldetag: 15.12.2025
(51) Int. Cl.: B23D 59/00, B23D 45/10, B23Q 17/09

(54) **SYSTEM UND VERFAHREN ZUR ORGANISATION VON WERKZEUGEN FÜR EINE HOLZVERARBEITUNGSANLAGE**

(71) Anmelder: Gebrüder Linck, Maschinenfabrik "Gatterlinck" GmbH & Co. KG, 77704 Oberkirch (DE)
(72) Erfinder: Langenecker, Wilhelm, 77767 Appenweier (DE); Rathke, Jörn, 77704 Oberkirch (DE)
(74) Vertreter: LBP Lemcke, Brommer & Partner Patentanwälte mbB

(57) **Zusammenfassung**

System zur Organisation von Werkzeugen (6) für eine Holzverarbeitungsanlage, mit einer Bearbeitungsmaschine (12),
wobei die Bearbeitungsmaschine (12) dazu eingerichtet ist, mindestens zwei Werkzeugelemente (2, 3) für eine Holzbearbeitung aufzunehmen,
dadurch gekennzeichnet, dass
ein erstes Prüfsystem (9) dazu eingerichtet ist, die mindestens zwei Werkzeugelemente (2, 3) in und/oder an der Montagestation (7) jeweils anhand eines Identifikationsmerkmals (4, 5) zu identifizieren, und
eine Steuereinrichtung (10) dazu eingerichtet ist, die Werkzeugelemente (2, 3) in Abhängigkeit der Identifikationsmerkmale (4, 5) anhand einer Zuordnungsinformation miteinander zu verknüpfen, und
ein zweites Prüfsystem (11) dazu eingerichtet ist, eines der mindestens zwei Werkzeugelemente (2, 3) anhand seines Identifikationsmerkmals (4, 5) in der Bearbeitungsmaschine (12) zu identifizieren, und die Steuereinrichtung (10) ferner dazu eingerichtet ist, anhand der Zuordnungsinformation eine Anwesenheit zumindest des anderen der zwei Werkzeugelemente (2, 3) in und/oder an der Bearbeitungsmaschine (12) zu erkennen.

## Beschreibung

Die Erfindung betrifft ein System sowie ein Verfahren zur Organisation von Werkzeugen für eine Holzverarbeitungsanlage.

In der industriellen Holzbearbeitung dienen Holzverarbeitungsanlagen dazu, Holzwerkstücke mit definierten geometrischen Eigenschaften zu erzeugen. Hierfür werden Baumstämme zunächst gegebenenfalls in mehreren Schritten profiliert und anschließend zersägt, um mehrere Bretter zu erhalten. Die dafür genutzten Werkzeuge werden für den Einsatz in der Holzverarbeitungsanlage aus einem Lager bereitgestellt, meist zu einer Werkzeuggruppe montiert und in der Holzverarbeitungsanlage gerüstet.

Aufgrund der natürlichen Abweichungen zwischen den Geometrien mehrerer Baumstämme und daraus erzeugter Werkstücke, ist es üblich, dass die eingesetzten Werkzeuge unterschiedlich stark beansprucht werden. Nach dem Einsatz der Werkzeuge werden diese wieder eingelagert, wodurch die Werkzeuge unterschiedlicher Verschleißzustände vermengt werden können und es nicht nachvollziehbar ist, welchem dieser Werkzeuge ein Ausfall möglicherweise zeitnah bevorsteht. Sofern diese Werkzeuge ungeachtet ihres fortgeschrittenen Verschleißzustandes gerüstet werden, entsteht ferner das Risiko einer geringen Schnittqualität bei der Bearbeitung von Holzwerkstücken sowie eines Anlagenstillstands infolge eines erforderlichen Werkzeugwechsels.

Zwar ist es möglich, die Werkzeuge hinsichtlich ihres Verschleißzustandes individuell zu bewerten, bevor sie eingelagert oder in der Bearbeitungsmaschine gerüstet werden, allerdings geht dies mit einem hohen Aufwand einher. Dieser hohe Aufwand kann sich insbesondere dadurch ergeben, dass der Verschleißzustand von Werkzeugen im montierten Zustand eines Werkzeugs oder einer Werkzeuggruppe oft schwer zu erkennen ist und nach einer Demontage oft nicht zugeordnet werden kann, an welcher Position ein Werkzeugelement innerhalb eines Werkzeugs zuvor eingesetzt wurde und welcher Beanspruchung es ausgesetzt war.

Es ist die Aufgabe der Erfindung, Mittel vorzuschlagen, mittels derer gleichzeitig eine hohe Bearbeitungsqualität in der Holzverarbeitung bei hoher Anlagenverfügbarkeit sichergestellt werden kann und welche mit einem geringen organisatorischen Aufwand einhergeht.

Die Aufgabe wird gelöst mittels eines Systems nach Anspruch 1 sowie einem Verfahren nach Anspruch 12. Vorteilhafte Weiterbildungen sind Gegenstände abhängiger Unteransprüche.

Das erfindungsgemäße System dient der Organisation von Werkzeugen für eine Holzverarbeitungsanlage und umfasst eine Bearbeitungsmaschine sowie mindestens zwei Werkzeugelemente für einen Einsatz in der Bearbeitungsmaschine. Die Bearbeitungsmaschine ist dazu eingerichtet, die mindestens zwei Werkzeugelemente für eine Holzbearbeitung aufzunehmen.

Es ist wesentlich, dass ein erstes Prüfsystem dazu eingerichtet ist, die mindestens zwei Werkzeugelemente jeweils anhand eines Identifikationsmerkmals zu identifizieren. Ferner ist eine Steuereinrichtung dazu eingerichtet, die Werkzeugelemente in Abhängigkeit der Identifikationsmerkmale anhand einer Zuordnungsinformation miteinander zu verknüpfen. Ein zweites Prüfsystem ist dazu eingerichtet, eines der mindestens zwei Werkzeugelemente anhand seines Identifikationsmerkmals in und/oder an der Bearbeitungsmaschine zu identifizieren. Die Steuereinrichtung ist ferner dazu eingerichtet, anhand der Zuordnungsinformation eine Anwesenheit zumindest des anderen der zwei Werkzeugelemente in und/oder an der Bearbeitungsmaschine zu erkennen.

Die Erfindung beruht auf der Erkenntnis, dass üblicherweise eingesetzte Werkzeugelemente in Holzverarbeitungsanlagen eine vorhersagbare Lebensdauer aufweisen, die sich beispielsweise unmittelbar aus Herstellerangaben, Erfahrungswerten oder rechnerischen Analysen ableiten lässt. Deshalb ist es erfindungsgemäß ausreichend, die eingesetzten Werkzeuge vor ihrem Einsatz in der Bearbeitungsmaschine zu erkennen, wobei insbesondere auf eine Überprüfung ihres individuellen Zustandes verzichtet werden kann. Stattdessen kann durch eine Erkennung von Werkzeugelementen berücksichtigt werden, welche Restlebensdauer oder Einsatzdauer bis zur nächsten Instandsetzungsmaßnahme verbleibt. Dadurch ist es möglich, Wartungsmaßnahmen zu planen und einen voraussichtlichen Ausfall eines Werkzeugelements hierfür frühzeitig zu berücksichtigen.

Es ist ein Vorteil, dass mehrere Werkzeugelemente über die Zuordnungsinformation miteinander verknüpft werden, sodass es zum Zeitpunkt des tatsächlichen Einsatzes in der Bearbeitungsmaschine, nicht erforderlich ist, die Anwesenheit aller Werkzeugelemente zu erfassen, sondern lediglich die Anwesenheit eines einzelnen Werkzeugelements. Dies ist besonders vorteilhaft, da Werkzeugelemente eingesetzt werden können, die insbesondere im montierten Zustand einer Werkzeugbaugruppe äußerlich nicht erkennbar sind. Bei Überschreitung einer definierbaren Betriebsdauer, die einem Ausfall bevorsteht, kann dies von der Steuereinrichtung erkannt und ausgegeben werden, insbesondere in Abhängigkeit eines leistungsbezogenen Maschinenparameters.

Eine Bearbeitungsmaschine kann als eine Maschine der Holzverarbeitungsanlage angesehen werden, die dazu eingerichtet ist, Bearbeitungsvorgänge an einem Werkstück aus Holz oder holzähnlichem Material durchzuführen. Die Bearbeitungsmaschine kann eine oder mehrere Bearbeitungseinheiten umfassen, die jeweils mit einer Werkzeugaufnahme oder Werkzeugspindel versehen sind, in der das Werkzeug oder eine Werkzeuggruppe, welche die Werkzeugelement umfassen, eingesetzt und betrieben werden kann. Die Bearbeitungsmaschine kann ferner Mittel zum Einspannen, Positionieren und Bewegen des Werkstücks sowie Einrichtungen zum Wechseln oder Rüsten der Werkzeuge aufweisen.

Ein Werkzeugelement kann als ein Bauteil angesehen werden, das zur Bildung eines Werkzeugs oder Werkzeuggruppe vorgesehen ist und mit weiteren Werkzeugelementen zusammengesetzt werden kann. Ein Werkzeugelement kann zur Erfüllung einer Bearbeitungsfunktion vorgesehen sein oder als Verbindungselement zwischen funktionalen Teilen des Werkzeugs dienen. Grundsätzlich ist die Erfindung nicht auf eine bestimmte Art von Werkzeugelementen beschränkt. Insbesondere können als Werkzeugelemente Schneidwerkzeuge, Messer, Frässcheiben, Distanzringe, Spannringe, Trägerkörper oder ähnliche Komponenten vorgesehen sein, die allein oder gemeinsam mit einem anderen Werkzeugelement die Wirkgeometrie und Funktion des Werkzeugs bestimmen.

Ein Identifikationsmerkmal eines Werkzeugelements kann als eine Kennzeichnung angesehen werden, anhand derer das jeweilige Werkzeugelement eindeutig individualisierbar ist. Das Identifikationsmerkmal kann unterschiedliche Arten von Informationen repräsentieren, die beispielsweise optisch, magnetisch, elektrisch, mechanisch oder auf grundsätzlich beliebige andere Weise erfassbar sind. Es kann dem Werkzeugelement inhärent sein, etwa durch dessen Materialeigenschaften oder Form, oder dem Werkzeugelement aufgebracht oder zugeordnet sein, beispielsweise durch eine Markierung, Prägung oder ein separates Kennzeichnungselement.

Ein Prüfsystem, insbesondere das erste und/oder das zweite Prüfsystem, kann als ein System angesehen werden, das dazu eingerichtet ist, ein an einem Werkzeugelement vorhandenes Identifikationsmerkmal zu erfassen und die aus dem Merkmal gewonnene Information bereitzustellen. Das Prüfsystem kann eine oder mehrere Einrichtungen zur Erfassung des Identifikationsmerkmals aufweisen, die je nach Art des Merkmals beispielsweise optisch, magnetisch, elektrisch, mechanisch oder auf eine andere physikalische Weise arbeiten. Die erfasste Information kann in digitalisierter Form ausgegeben und einer nachgeordneten Einrichtung zur weiteren Verarbeitung bereitgestellt werden.

Eine Steuereinrichtung kann als eine Einrichtung angesehen werden, die dazu eingerichtet ist, Informationen von dem Prüfsystem aufzunehmen und zur Steuerung oder Überwachung eines mit der Holzverarbeitungsanlage verbundenen Prozesses zu verwenden. Die Steuereinrichtung kann die vom Prüfsystem bereitgestellten Informationen auswerten, speichern oder an weitere Systeme weiterleiten und so beispielsweise den Ablauf einer Montage, einen Rüstvorgang oder den Betrieb einer Bearbeitungsmaschine beeinflussen. Die Steuereinrichtung kann ein oder mehrere Steuergeräte umfassen, die insbesondere für den Betrieb der Holzverarbeitungsanlage vorgesehen sind, wie etwa Industrie-PCs, speicherprogrammierbare Steuerungen (SPS/PLCs) oder vergleichbare rechnerbasierte Steuerungseinheiten.

Eine Zuordnungsinformation kann als eine Information angesehen werden, die eine Beziehung zwischen zwei Werkzeugelementen beschreibt. Sie gibt vorzugsweise an, dass die betreffenden Werkzeugelemente einander zugeordnet sind, insbesondere im Hinblick auf eine gemeinsame Anordnung innerhalb eines Werkzeugs oder einer Werkzeuggruppe. Die Zuordnungsinformation kann aus der Erfassung der Identifikationsmerkmale der beiden Werkzeugelemente abgeleitet und vorzugsweise durch eine Steuereinrichtung erzeugt und gespeichert werden. Eine Zuordnungsinformation kann in unterschiedlichen Formen verkörpert sein. Sie kann beispielsweise als Datensatz, Zahlenkombination, Tabelleneintrag, Vektor, Matrix, oder als grundsätzlich beliebiges Element einer digitalen Liste oder Datenstruktur vorliegen, in der die Werkzeugelemente einander zugeordnet sind. Alternativ kann die Zuordnungsinformation auch implizit durch eine Speicheradresse, einen Verweis oder eine logische Verknüpfung innerhalb der Steuereinrichtung abgebildet sein.

Es liegt im Rahmen der Erfindung, dass das erste Prüfsystem als Bestandteil einer Montagestation eingerichtet ist oder als davon unabhängiger Bestandteil, insbesondere funktional und strukturell unabhängiger Bestandteil, ausgeführt ist. In einer einfachen Ausführungsform kann das erste Prüfsystem insbesondere ein handgeführtes System sein, mittels dessen es möglich ist, die Identifikationsmerkmale zu erkennen und an die Steuereinrichtung auszugeben. Dementsprechend kann das zweite Prüfsystem als Bestandteil der Bearbeitungsmaschine ausgeführt sein oder als davon unabhängiger Bestandteil, insbesondere funktional und strukturell unabhängiger Bestandteil. Vorzugsweise kann das zweite Prüfsystem ein handgeführtes System ein, mittels dessen eines der Identifikationsmerkmale des gefügten Werkzeugs erkennbar ist, insbesondere bevor dieses in die Bearbeitungsmaschine gefügt wird.

In einer vorteilhaften Weiterbildung der Erfindung ist eine Montagestation vorgesehen, in und/oder an der die Werkzeugelemente zu dem Werkzeug gefügt werden und in der und/oder an der das erste Prüfsystem angeordnet ist.

Diese Ausgestaltung bietet erhebliche prozesstechnische Vorteile. Die Montage der Werkzeuge kann räumlich und zeitlich entkoppelt vom Betrieb der eigentlichen Bearbeitungsmaschine erfolgen. Dies ermöglicht es, Werkzeuge vorzubereiten, während die Anlage produktiv arbeitet, was die Gesamtanlagenverfügbarkeit steigert. Die typischen Abläufe bei einer solchen dedizierten Montage ermöglichen es, eindeutig und sicher festzustellen, welche Werkzeugelemente für den Einsatz vorbereitet werden. Insbesondere wenn Werkzeugelemente wie Sägeblätter sequentiell auf einer Büchse angeordnet werden, kann jedes gefügte Element zuverlässig vom ersten Prüfsystem identifiziert und der Steuereinrichtung gemeldet werden.

Ein weiterer Vorteil besteht darin, dass Identifikationsmerkmale an Positionen der Werkzeugelemente angebracht werden können, die im montierten Zustand verdeckt und somit vor äußeren Einflüssen wie Schmutz oder Beschädigung geschützt sind. Während des Montagevorgangs an der Montagestation ist dieser Bereich jedoch zumindest zeitweise freigelegt und für das erste Prüfsystem leicht zugänglich, was eine hohe Erkennungssicherheit gewährleistet.

Im Rahmen der vorteilhaften Weitebildung kann eine Montagestation als eine Station angesehen werden, die dazu eingerichtet ist, mehrere Werkzeugelemente zu einem Werkzeug oder Werkzeugmodul zusammenzufügen, bevor dieses in einer Bearbeitungsmaschine eingesetzt wird. Die Montagestation kann innerhalb der Holzverarbeitungsanlage angeordnet oder als separate Einheit, insbesondere in räumlicher Nähe zu einer Bearbeitungsvorrichtung, ausgebildet sein. Sie kann Mittel zum Halten, Positionieren, Ausrichten und Verbinden der Werkzeugelemente aufweisen, beispielsweise Spannvorrichtungen, Anschläge oder Fügeeinrichtungen. Die Montage kann manuell, teilautomatisiert oder automatisiert erfolgen, insbesondere mittels eines Industrieroboters, und kann ferner Einrichtungen zum Justieren oder Prüfen der montierten Werkzeugelemente umfassen.

In einer vorteilhaften Weiterbildung ist die Bearbeitungsmaschine eine Kreissägevorrichtung. Mindestens eines der zwei Werkzeugelemente ist ein Kreissägeblatt und mindestens ein anderes der zwei Werkzeugelemente ist eine Büchse zur Aufnahme eines oder mehrerer Kreissägeblätter. Die Montagestation ist dazu eingerichtet, die Büchse und das Kreissägeblatt zu fügen.

Die vorstehend beschriebene Weiterbildung beruht auf der Erkenntnis, dass Sägewerkzeuge besonders von einer ungleichmäßigen Beanspruchung betroffen sind. Sägeblätter einer Kreissägevorrichtung sind üblicherweise parallel zueinander angeordnet und gelangen bei einer gemeinsamen Rotationsbewegung in trennenden Eingriff mit einem Baumstamm bzw. daraus erzeugten Kantling. Mittig angeordnete Sägeblätter werden hierbei unabhängig von den Abmessungen des Kantlings üblicherweise bei jedem Sägevorgang beansprucht, während außermittig angeordnete Sägeblätter nur bei vergleichsweise breiten Kantlingen beansprucht werden.

Darüber hinaus sind die Sägeblätter und die Sägebüchse, die zu einem Werkzeug gefügt sind, aufgrund ihrer Position im Werkzeug nicht immer gut erkennbar. Gleichzeitig ist es eine Erkenntnis, dass die typischen Abläufe bei einer Montage es ermöglichen, eindeutig und sicher festzustellen, welche Sägeblätter und welche Büchse für den Einsatz in einer Sägevorrichtung vorbereitet werden. Insbesondere werden Sägeblätter hierbei sequentiell auf einer Büchse angeordnet, sodass vorzugsweise jedes gefügte Sägeblatt und die Büchse identifiziert werden und mittels der Steuereinrichtung einander zugeordnet werden können. Vor dem Einsatz in der Bearbeitungsmaschine ist es insbesondere allein anhand der Büchse möglich zu erkennen, welche Sägeblätter zu dem Werkzeug gefügt sind.

Ein weiterer Vorteil besteht darin, dass die Sägeblätter im Bereich einer Bohrung, mit der sie jeweils mit der Büchse verbunden werden, vorzugsweise dazu geeignet sind, das Identifikationsmerkmal aufzunehmen. Im montierten Zustand kann dieser Bereich verdeckt sein und ist damit vorzugsweise vor äußeren Einflüssen geschützt. Während der Montage kann dieser Bereich jedoch zumindest zeitweise freigelegt und für das erste Prüfmittel zugänglich sein.

Die vorstehend erläuterten Erwägungen sind auf Werkzeuge übertragbar, die eine grundsätzlich beliebige Anzahl an Werkzeugelementen aufweisen. In einer vorteilhaften Weiterbildung ist die Montagestation dazu eingerichtet, mindestens drei Werkzeugelemente zu fügen, wobei das erste Prüfsystem dazu eingerichtet ist, die mehr als zwei Werkzeugelemente jeweils anhand eines Identifikationsmerkmals zu identifizieren. Die Steuereinrichtung ist dazu eingerichtet, die Werkzeugelemente in Abhängigkeit der Identifikationsmerkmale anhand der Zuordnungsinformation miteinander zu verknüpfen. Das zweite Prüfsystem ist dazu eingerichtet ist, eines der mehr als zwei Werkzeugelemente anhand seines Identifikationsmerkmals in der Bearbeitungsmaschine zu identifizieren. Die Steuereinrichtung ist ferner dazu eingerichtet ist, anhand der Zuordnungsinformation eine Anwesenheit aller anderen Werkzeugelemente in der Bearbeitungsmaschine zu erkennen.

In einer vorteilhaften Weiterbildung ist ein erstes der mindestens drei Werkzeugelemente ein Kreissägeblatt, ein zweites der mindestens drei Werkzeugelemente eine Büchse und ein drittes der mindestens drei Werkzeugelemente eine Abstandshülse.

Abstandshülsen werden üblicherweise dazu genutzt, um einen definierten Abstand zwischen zwei Sägeblättern entlang der Längsachse einer Büchse einzustellen. Üblicherweise sind die Abstandshülsen innerhalb eines montierten Werkzeugs zumindest in ihrem jeweils stirnseitigen Bereich verdeckt, können jedoch während der Montage eindeutig identifiziert werden, insbesondere, wenn die Abstandshülsen und Sägeblätter sequentiell an der Büchse angeordnet werden.

In einer vorteilhaften Weiterbildung ist die Steuereinrichtung mit der Bearbeitungsmaschine signaltechnisch verbunden und dazu eingerichtet, anhand einer Betriebsinformation der Bearbeitungsmaschine auf eine Einsatzzeit des Werkzeugelements zu schließen, dessen Anwesenheit in der Bearbeitungsmaschine mittels der Zuordnungsinformation erkennbar ist.

Gemäß der vorstehend beschriebenen Weiterbildung können Maschinendaten dazu genutzt werden, um eine Einsatzzeit des Werkzeugelements zu ermitteln. Insbesondere kann die Bearbeitungsmaschine ein eigenes Steuergerät aufweisen, welches zumindest signaltechnisch mit der Steuereinrichtung verbunden ist und wobei die Betriebsinformation insbesondere von einem Steuerprogramm der Bearbeitungsmaschine abhängig ist. Es liegt im Rahmen der vorteilhaften Weiterbildung, dass die Steuereinrichtung und das Steuergerät der Bearbeitungsmaschine räumlich und/oder funktional miteinander verbunden oder voneinander getrennt sind.

In einer vorteilhaften Weiterbildung umfasst das System ein Werkzeuglager, welches dazu eingerichtet ist, mehrere Werkzeugelemente zwischen mehreren Holzbearbeitungsvorgängen mittels der Bearbeitungsmaschine aufzunehmen. Eine Datenbank ist dazu eingerichtet, um die Einsatzzeit des Werkzeugelements, dessen Anwesenheit in der Bearbeitungsmaschine mittels der Zuordnungsinformation erkennbar ist, aus den mehreren Holzbearbeitungsvorgängen kumulativ zu speichern.

Mittels der vorstehend beschriebenen Weiterbildung ist es möglich, die Werkzeugelemente, die in einem Werkzeuglager aufbewahrt werden können, mit einer Datenbank zu verwalten, die Information über die Gesamtbetriebsdauer der Werkzeugelemente umfasst. Vorteile liegen insbesondere darin, dass die Sägeblätter in einer Datenbank verwaltet und deren Gesamtbetriebszeit erfasst wird. Dies ermöglicht eine präzisere Prognose des Verschleißgrades der Sägeblätter und somit eine effizientere Planung von Wartungs- und Austauschmaßnahmen. Zusätzlich kann das System zur Optimierung der Lagerhaltung beitragen, da die Daten zur Einsatzfrequenz der Werkzeugelemente verwendet werden können, um den Bedarf an Ersatzteilen besser zu planen.

In einer vorteilhaften Weiterbildung ist die Steuereinrichtung dazu eingerichtet, bei Erreichung einer Schwelleneinsatzzeit eines der Werkzeugelemente ein Wartungssignal auszugeben. Diese Funktion trägt signifikant zur Erhöhung der Anlagenverfügbarkeit und der Sicherheit im Betrieb bei. Die Schwelleneinsatzzeit wird insbesondere individuell für jedes Werkzeugelement definiert, basierend auf Faktoren wie Material und/oder Anwendung und/oder Herstellerempfehlungen. Sobald die definierte Einsatzgrenze erreicht ist, signalisiert das System vorzugsweise, dass eine Wartung erforderlich ist oder bevorsteht, z.B. durch akustische oder optische Anzeigen an der Maschine oder Meldungen in einer Überwachungssoftware.

In einer vorteilhaften Weiterbildung sind Identifikationsinformationen jeweils oberflächlich an den Werkzeugelementen angeordnet und sind insbesondere optisch erkennbar. Das erste Prüfsystem und/oder das zweite Prüfsystem umfassen jeweils ein optisches Prüfmittel. Insbesondere umfassen die Identifikationsinformationen jeweils einen Barcode und/oder einen DataMatrix-Code und/oder eine Gravur. Bevorzugt umfassen das erste und/oder zweite Prüfsystem ein Kamerasystem.

Die Anordnung der Identifikationsinformationen direkt auf den Werkzeugelementen, insbesondere in optisch auffälliger Form wie Barcodes, DataMatrix-Codes oder Gravuren, bringt zahlreiche Vorteile mit sich. Kamerasysteme können diese Codes schnell und präzise lesen, auch bei ungünstigen Lichtverhältnissen. DataMatrix-Codes ermöglichen es, eine Vielzahl von Informationen pro Code zu speichern, wie z.B. Werkzeugidentifikation, Materialart oder Wartungshinweise. Gravuren sind dauerhaft und widerstandsfähig gegen Verschleiß und Umwelteinflüsse. Diese Kombination ermöglicht eine automatische Erkennung der Werkzeugelemente, wodurch Prozesse wie die Zuordnung von Werkzeugen zu Maschinen oder die Verfolgung des Werkzeugverbrauchs vereinfacht werden. Die transparente Dokumentation und Nachvollziehbarkeit durch gespeicherte Daten in den Codes steigert die Effizienz im Maschinenpark.

In einer vorteilhaften Weiterbildung ist die Identifikationsinformation durch eine funkbasierte Identifikationseinrichtung, insbesondere ein RFID-Element, bereitgestellt und ist von dem ersten Prüfsystem und/oder dem zweiten Prüfsystem drahtlos auslesbar.

Da das Auslesen gemäß vorstehend beschriebener Weiterbildung kontaktlos erfolgen kann, ist keine optische Sichtverbindung zwischen dem Prüfsystem und dem jeweiligen Werkzeugelement erforderlich. Die Identifikationsinformation kann somit auch dann zuverlässig erfasst werden, wenn das Werkzeugelement verschmutzt, beschichtet oder in einer schwer zugänglichen Position angeordnet ist. Dadurch wird die Betriebssicherheit insbesondere unter industriellen Einsatzbedingungen deutlich erhöht. Ein weiterer Vorteil besteht darin, dass die Identifikationseinrichtung zusätzliche Informationen speichern kann, beispielsweise eine individuelle Werkzeugkennung, Typdaten, Nutzungszyklen oder Wartungsinformationen. Diese können vom Prüfsystem gezielt ausgelesen und in automatisierte Prüf- oder Fertigungsabläufe integriert werden, wodurch eine umfassende Prozessüberwachung und Rückverfolgbarkeit ermöglicht wird. Darüber hinaus entfällt bei einer funkbasierten Identifikationseinrichtung die Notwendigkeit regelmäßiger Wartungsarbeiten wie das Reinigen optischer Markierungen oder Sichtfenster. Dies reduziert den Instandhaltungsaufwand und erhöht die Lebensdauer der Komponenten.

In einer weiteren Ausführungsform kann die funkbasierte Identifikation ergänzend zu einer optischen Erkennung vorgesehen sein, sodass eine redundante Identifizierung der Werkzeugelemente möglich ist. Hierdurch wird die Zuverlässigkeit der Erkennung und die Datenintegrität des gesamten Prüfsystems weiter verbessert.

Wie eingangs erläutert ist die Aufgabe der Erfindung auch gelöst durch ein Verfahren zur Organisation von Werkzeugen für eine Holzverarbeitungsanlage. Mindestes zwei Werkzeugelemente werden für eine Holzbearbeitung in der Bearbeitungsmaschine aufgenommen. Es ist wesentlich, dass die mindestens zwei Werkzeugelemente jeweils anhand eines Identifikationsmerkmals mittels eines ersten Prüfsystems identifiziert werden. Die Werkzeugelemente werden in Abhängigkeit der Identifikationsmerkmale anhand einer Zuordnungsinformation miteinander zu verknüpft. Zumindest eines der mindestens zwei Werkzeugelemente wird anhand seines Identifikationsmerkmals mittels eines zweiten Prüfsystems identifiziert wird und anhand der Zuordnungsinformation eine Anwesenheit zumindest des anderen der zwei Werkzeugelemente in der Bearbeitungsmaschine erkannt.

Das Verfahren ist insbesondere mittels eines Systems gemäß der Erfindung oder einer vorteilhaften Weiterbildung davon durchführbar oder umgekehrt. Dementsprechend geltend die Ausführungen hinsichtlich der technischen Merkmale sowie der erreichbaren Vorteile des erfindungsgemäßen Systems sowie seiner vorteilhaften Weiterbildungen für das Verfahren entsprechend.

Eine mögliche Ausführungsform der Erfindung sowie damit verbundene Vorteile sind nachfolgend beispielhaft anhand der Figuren erläutert.
- Figur 1: zeigt ein Werkzeuglager und eine Montagestation mit einem ersten Prüfsystem.
- Figur 2: zeigt eine Bearbeitungsmaschine mit einem zweiten Prüfsystem.

In der industriellen Holzbearbeitung spielen Holzverarbeitungsanlagen eine zentrale Rolle bei der Herstellung von Werkstücken mit präzisen geometrischen Formen. Dabei durchlaufen Baumstämme diverse Profil- und Sägeschritte, um schließlich in Bretter zerlegt zu werden. Die dafür benötigten Werkzeuge werden aus einem Lager gezielt ausgewählt, meist als Gruppe montiert und in die Holzbearbeitungsanlage eingebaut.

Da jedes Holzstück individuelle Gegebenheiten aufweist, werden die eingesetzten Werkzeuge unterschiedlich stark beansprucht. Nach dem Einsatz werden sie wieder ins Lager zurückgebracht, wodurch sich ein Gemisch aus Werkzeugen unterschiedlicher Verschleißgrade ergibt. Es ist schwierig zu identifizieren, welche Werkzeuge kurz vor einem Ausfall stehen. Die Verwendung von verschlissenen Werkzeugen birgt das Risiko einer beeinträchtigten Schnittqualität und potenzieller Stillstände aufgrund notwendiger Werkzeugwechsel.

Obwohl eine individuelle Bewertung des Verschleißgrades möglich ist, stellt dies einen hohen Aufwand dar. Besonders bei montierten Werkzeuggruppen ist die Beurteilung schwierig, da der Zustand oft erst nach Demontage erkennbar wird. Zudem gestaltet sich die Zuordnung zu vorherigen Einsätzen und Belastungen nach dieser Vorgehensweise kompliziert.

Mittels des nachfolgend erläuterten Systems, welches beispielhaft in einer Sägevorrichtung eingesetzt werden kann, ist es möglich, diese Nachteile zu überwinden.

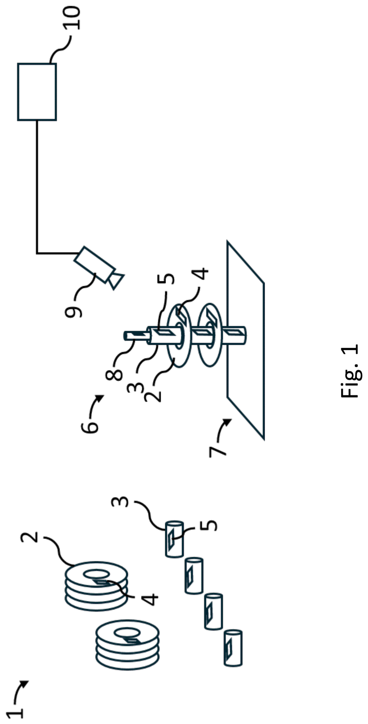

Figur 1 zeigt ein Werkzeuglager 1, in dem eine Vielzahl an Werkzeugelementen in Form von Kreissägeblättern 2 und Abstandshülsen 3 gelagert sind. Diese weisen unterschiedliche Verschleißzustände auf, die äußerlich nicht erkennbar sind. Die Werkzeugelemente 2, 3 weisen auch jeweils ein Identifikationsmerkmal 4 bzw. 5 auf, welche äußerlich angebracht sind.

Vorliegend sind die Identifikationsmerkmale 4, 5 jeweils als optisch erkennbare DataMatrix-Codes ausgestaltet, welche äußerlich an den Werkzeugelementen 2, 3 angebracht sind. Die Identifikationsmerkmale 4, 5 individualisieren die Werkzeugelemente 2, 3, sodass es bei Erkennung eines der Identifikationsmerkmale möglich ist, auf die Identität des dazugehörigen Werkzeugelements 2, 3 zu schließen.

Damit die Werkzeugelemente 2, 3 zum Einsatz kommen können, werden diese zu einem Werkzeug 6 zusammengesetzt. Dies erfolgt mittels einer Montagestation 7, welche in Figur 1 beispielhaft als Montagetisch gezeigt ist. In der Montagestation 7 werden die Werkzeugelemente 2, 3, die vorliegend als Sägeblätter und Abstandshülsen ausgebildet sind, nacheinander auf einer Spannhülse 8 angeordnet. Die Spannhülse 8 dient im späteren Einsatz des Werkzeugs 6 dazu, mit einer Antriebsachse einer Bearbeitungsmaschine 12 verbunden zu werden und eine Antriebsbewegung auf die Sägeblätter 2 zu übertragen. Die Abstandshülsen 3 dienen dazu, einen definierten Abstand zwischen den Sägeblättern 2 einzustellen.

Die Identifikationsmerkmale 4, 5 sind derart auf den Werkzeugelementen 2, 3 angeordnet, dass sie während des Fügens zu dem Werkzeug 6 nacheinander optisch erkennbar sind. Dies erfolgt mittels eines ersten Prüfsystems 9 in Gestalt einer Kamera. Diese erfasst die Identifikationsmerkmale 4, 5 aller Werkzeugelemente und übermittelt diese an eine Steuerungseinrichtung 10. Anhand der Identifikationsmerkmale 4, 5 werden die Werkzeugelemente 2, 3 des Werkzeugs 6 mittels einer Zuordnungsinformation miteinander verknüpft.

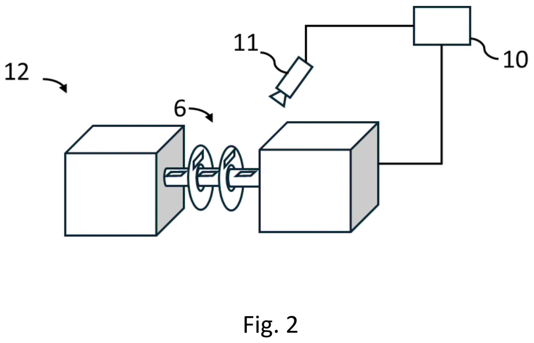

Nach abgeschlossener Montage des Werkzeugs 6 wird dieses in einer Bearbeitungsvorrichtung 12, bei der es sich gemäß Figur 2 um eine Sägevorrichtung handelt, eingesetzt. Ein zweites Prüfsystem 11 erkennt hierbei eines der Identifikationsmerkmale des Werkzeugs 6 und übermittelt dieses an die Steuereinrichtung 10. Anhand der Zuordnungsinformation, mittels derer die Werkzeugelemente 2, 3 miteinander verknüpft sind, wird anhand des erkannten Identifikationsmerkmals auf die Anwesenheit aller übrigen Werkzeugelemente 2, 3 geschlossen, die das Werkzeug 6 definieren. Dadurch ist es möglich, zu überwachen, welche Werkzeugelemente 2, 3 in der Bearbeitungsmaschine 12 eingesetzt werden. Durch eine signaltechnische Verbindung zwischen der Bearbeitungsmaschine 12 und der Steuereinrichtung 10 ist es ferner möglich, die Werkzeugelemente 2, 3 mit Betriebsdauern der Maschine 12 zu verknüpfen. Dadurch kann Einsatzzeit des Werkzeugelements 2, 3, dessen Anwesenheit in der Bearbeitungsmaschine 12 mittels der Zuordnungsinformation erkennbar ist, aus den mehreren Holzbearbeitungsvorgängen kumulativ gespeichert werden. Anhand von Herstellinformationen der Werkzeugelemente 2, 3 kann eine Schwelleneinsatzzeit ermittelt werden. Bei Erreichung er Schwelleneinsatzzeit eines der Werkzeugelemente 2, 3 wird ein Wartungssignal ausgeben. Dadurch ist es möglich, Wartungsmaßnahmen zu planen, ohne dass es zu einem unerwünschten Stillstand der Holverarbeitungsanlage kommt.

In hier nicht näher gezeigter Weise können die Identifikationsmerkmale 4, 5 nicht optisch erkennbar, sondern mittels einer funkbasierten Identifikationseinrichtung bereitgestellt sein, z.B. einem RFID-Element, welches mittels des ersten Prüfsystems 9 oder des zweiten Prüfsystems 11 erkennbar ist. In hier ebenfalls nicht gezeigter Weise kann die Montage mittels eines automatisierten Handhabungssystems, insbesondere eines Industrieroboters, erfolgen.

## Patentansprüche

1. System zur Organisation von Werkzeugen für eine Holzverarbeitungsanlage, mit einer Bearbeitungsmaschine (12),
wobei die Bearbeitungsmaschine (12) dazu eingerichtet ist, mindestens zwei Werkzeugelemente (2,3) für eine Holzbearbeitung aufzunehmen,
**dadurch gekennzeichnet, dass**
ein erstes Prüfsystem (9) dazu eingerichtet ist, die mindestens zwei Werkzeugelemente (2,3) jeweils anhand eines Identifikationsmerkmals (4,5) zu identifizieren, und
eine Steuereinrichtung (10) dazu eingerichtet ist, die Werkzeugelemente (2,3) in Abhängigkeit der Identifikationsmerkmale (4,5) anhand einer Zuordnungsinformation miteinander zu verknüpfen, und
ein zweites Prüfsystem (11) dazu eingerichtet ist, eines der mindestens zwei Werkzeugelemente (2,3) anhand seines Identifikationsmerkmals (4,5) in und/oder an der Bearbeitungsmaschine (12) zu identifizieren, und
die Steuereinrichtung (10) ferner dazu eingerichtet ist, anhand der Zuordnungsinformation eine Anwesenheit zumindest des anderen der zwei Werkzeugelemente (2, 3) in und/oder an der Bearbeitungsmaschine (12) zu erkennen.

2. System nach Anspruch 1,
wobei eine Montagestation (7) vorgesehen ist, in und/oder an der die Werkzeugelemente (2, 3) zu dem Werkzeug (6) gefügt werden und in der und/oder an der das erste Prüfsystem (9) angeordnet ist.

3. System nach Anspruch 1 oder 2,
wobei die Bearbeitungsmaschine (12) eine Kreissägevorrichtung ist und eines der mindestens zwei Werkzeugelemente (2, 3) ein Kreissägeblatt ist und wobei mindestens ein anderes der zwei Werkzeugelemente (2, 3) eine Büchse zur Aufnahme eines oder mehrerer Kreissägeblätter ist und wobei vorzugsweise die Montagestation (7) dazu eingerichtet ist, die Büchse und das Kreissägeblatt zu fügen.

4. System nach mindestens einem der Ansprüche 2 oder 3,
wobei die Montagestation (7) dazu eingerichtet ist, mindestens drei Werkzeugelemente (2, 3) zu fügen, wobei das erste Prüfsystem (9) dazu eingerichtet ist, die mehr als zwei Werkzeugelemente (2, 3) jeweils anhand eines Identifikationsmerkmals (4, 5) zu identifizieren und die Steuereinrichtung (10) dazu eingerichtet ist, die Werkzeugelemente (2, 3) in Abhängigkeit der Identifikationsmerkmale (4, 5) anhand der Zuordnungsinformation miteinander zu verknüpfen und das zweite Prüfsystem (11) dazu eingerichtet ist, eines der mehr als zwei Werkzeugelemente (2, 3) anhand seines Identifikationsmerkmals (4, 5) in der Bearbeitungsmaschine (12) zu identifizieren und die Steuereinrichtung (10) ferner dazu eingerichtet ist, anhand der Zuordnungsinformation eine Anwesenheit aller anderen Werkzeugelemente (2, 3) in der Bearbeitungsmaschine (12) zu erkennen.

5. System nach Anspruch 3 und 4,
wobei ein erstes der mindestens drei Werkzeugelemente (2, 3) das Kreissägeblatt ist, ein zweites der mindestens drei Werkzeugelemente (2, 3) die Büchse ist und ein drittes der mindestens drei Werkzeugelemente (2, 3) eine Abstandshülse ist.

6. System nach mindestens einem der voranstehenden Ansprüche,
wobei die Steuereinrichtung (10) mit der Bearbeitungsmaschine (12) signaltechnisch verbunden ist, und dazu eingerichtet ist, anhand einer Betriebsinformation der Bearbeitungsmaschine (12) auf eine Einsatzzeit des Werkzeugelements (2, 3) zu schließen, dessen Anwesenheit in der Bearbeitungsmaschine (12) mittels der Zuordnungsinformation erkennbar ist.

7. System nach Anspruch 6,
mit einem Werkzeuglager (1), welches dazu eingerichtet ist, mehrere Werkzeugelemente (2, 3) zwischen mehreren Holzbearbeitungsvorgängen mittels der Bearbeitungsmaschine (12) aufzunehmen und wobei eine Datenbank eingerichtet ist, um die Einsatzzeit des Werkzeugelements (2, 3), dessen Anwesenheit in der Bearbeitungsmaschine (12) mittels der Zuordnungsinformation erkennbar ist, aus den mehreren Holzbearbeitungsvorgängen kumulativ zu speichern.

8. System zumindest nach Anspruch 6,
wobei die Steuereinrichtung (10) dazu eingerichtet ist, bei Erreichung einer Schwelleneinsatzzeit eines der Werkzeugelemente (2, 3) ein Wartungssignal auszugeben.

9. System nach mindestens einem der voranstehenden Ansprüche,
wobei sie Identifikationsinformation (4, 5) jeweils oberflächlich an den Werkzeugelementen (2, 3) angeordnet ist und insbesondere optisch erkennbar ist und wobei das erste Prüfsystem (9) und/oder das zweite Prüfsystem (11) jeweils ein optisches Prüfmittel umfassen.

10. System nach Anspruch 9,
wobei die Identifikationsinformationen (4, 5) jeweils einen Barcode und/oder einen DataMatrix-Code und/oder eine Gravur umfassen und das erste und/oder zweite Prüfsystem (9, 11) ein Kamerasystem umfassen.

11. System nach einem der Ansprüche 1 bis 10,
wobei die Identifikationsinformation (4, 5) durch eine funkbasierte Identifikationseinrichtung, insbesondere ein RFID-Element, bereitgestellt ist und von dem ersten Prüfsystem (9) und/oder dem zweiten Prüfsystem (11) drahtlos auslesbar ist.

12. Verfahren zur Organisation von Werkzeugen (6) für eine Holzverarbeitungsanlage, insbesondere mittels eines Systems gemäß einem der Ansprüche 1 bis 11,
wobei mindestens zwei Werkzeugelemente (2, 3) für eine Holzbearbeitung in der Bearbeitungsmaschine (12) aufgenommen werden,
**dadurch gekennzeichnet, dass**
die mindestens zwei Werkzeugelemente (2, 3) in der Montagestation (7) jeweils anhand eines Identifikationsmerkmals (4, 5) mittels eines ersten Prüfsystems (9) identifiziert werden,
und die Werkzeugelemente (2, 3) in Abhängigkeit der Identifikationsmerkmale (4, 5) anhand einer Zuordnungsinformation miteinander zu verknüpft werden,
und eines der mindestens zwei Werkzeugelemente (2, 3) anhand seines Identifikationsmerkmals (4, 5) mittels eines zweiten Prüfsystems (11) identifiziert wird und anhand der Zuordnungsinformation eine Anwesenheit zumindest des anderen der zwei Werkzeugelemente (2, 3) in der Bearbeitungsmaschine (12) erkannt wird.
